# FASCICULE DE BREVET EUROPEEN

(11) **EP 0 891 688 B1**
(45) Date de publication et mention de la délivrance du brevet: **07.11.2001**
(21) Numéro de dépôt: 98440150.5
(22) Date de dépôt: 03.07.1998
(51) Int. Cl.: A01B 33/14

(54) **Fixation améliorée et rapide pour outils de travail d'une machine agricole**
Verbesserte und schnelle Befestigung eines landwirtschaftlichen Maschinengeräts
Improved and quick agricultural machine tool fixing

(30) Priorité: 18.07.1997 FR 9709323
(43) Date de publication de la demande: 20.01.1999
(73) Titulaire: KUHN S.A., 67700 Saverne (FR)
(72) Inventeur: Kirch, Michel, 67260 Keskastel (FR)

(56) Documents cités:
- EP-A- 0 407 723
- EP-A- 0 501 349
- DE-A- 4 310 750
- DE-U- 29 514 041
- FR-A- 2 278 232
- GB-A- 2 200 522
- GB-A- 2 200 826

## Description

La présente invention se rapporte au domaine technique des machines agricoles destinées par exemple à travailler le sol. Ce domaine technique englobe tout type d'appareil comportant des éléments d'usure susceptibles d'être remplacés plus ou moins régulièrement.

L'invention concerne plus particulièrement une fixation d'outils de travail sur une herse rotative. Une telle fixation devrait être de préférence particulièrement rapide à mettre en oeuvre et efficace du point de vue de la tenue dans le temps.

Il est déjà connu de réaliser une machine de travail du sol munie d'une structure porteuse et comportant :
- un carter transversal à la direction d'avancement de la machine durant le travail,
- plusieurs rotors porte-outils montés sous le carter et susceptibles chacun de tourner autour d'un axe (x - x') respectif sensiblement vertical,
- des organes d'entraînement logés dans le carter et destinés à assurer l'animation des rotors porte-outils,
- des outils de travail présentant une partie de travail et une partie de liaison laquelle est destinée à être montée radialement par rapport à l'axe (x - x') sur le rotor porte-outils correspondant,
- des logements prévus sur les rotors porte-outils pour y positionner les parties de liaison,
   et
- un élément de liaison reliant entre eux au moins deux outils de travail d'un même rotor porte-outils de manière à retenir radialement lesdits outils de travail,

Ainsi le document DE-A-43 10 750 décrit un système de fixation pour des dents de herse rotative. Ce document décrit notamment une plaque munie de tétons venant s'engager dans les parties de fixation des outils. Cette plaque est vissée sur le rotor porte-outils. Une telle réalisation présente un inconvénient pendant les opérations de remplacement des dents, dans la mesure où il faut dévisser la plaque sur une course suffisante pour dégager les tétons traversant la partie de fixation. En outre, le remplacement de deux dents ne semble pouvoir se faire que simultanément en positionnant au préalable lesdites dents sur la plaque. L'ensemble doit alors être maintenu sur le rotor porte-outils pour pouvoir visser la plaque sur ledit rotor porte-outils. Cela semble très difficile pour l'utilisateur a fortiori lorsque un temps de remplacement minimum est recherché.

On connaît également le document EP-A-0 211 276 qui décrit une herse rotative comportant des rotors porte-outils présentant une configuration spécifique. Cette dernière est obtenue à l'aide d'une plaque métallique rapportée et fixée par soudure sur la pièce principale du rotor porte-outils. La plaque métallique réalise avec ladite pièce principale du rotor porte-outils des logements pour y introduire une partie de liaison des outils. Ces derniers sont, en outre, pourvus d'un perçage coïncidant avec une ouverture ménagée dans la pièce principale du rotor porte-outils et avec une ouverture ménagée dans la plaque métallique. Un moyen de maintien du type goujon est utilisé d'une part pour traverser les ouvertures et le perçage, et d'autre part pour prendre appui sur la pièce principale du rotor porte-outils et sur la plaque métallique. Ceci permet ainsi de lier les outils au rotor porte-outils.

Un tel montage présente un certain nombre d'inconvénients.

Ainsi les moyens de maintien décrits, du type goujon, sont souvent sujets au grippage après une certaine durée d'utilisation de la herse rotative. Ceci a souvent pour conséquence de rendre pénible le remplacement des outils de travail usés ou détériorés après le travail de la terre dans diverses conditions d'humidité et de structure du sol. Une mauvaise accessibilité ainsi qu'une faible zone de préhension des goujons rend le démontage desdits outils de travail difficile.

Un autre inconvénient des moyens de maintien connus réside au niveau des opérations de remplacement des outils, lesquelles nécessitent souvent une disponibilité en temps importante. Ceci est confirmé dans l'état de la technique présenté ci-dessus dans la mesure où au moins un moyen de liaison distinct est affecté à chaque outil de travail.

L'objet de la présente invention vise donc à s'affranchir de ces inconvénients, à faciliter le remplacement des outils de travail d'une machine agricole et à réduire le temps nécessaire à ces opérations.

Les objets et buts assignés à la présente invention sont atteints à l'aide d'une machine de travail du sol munie d'une structure porteuse et comportant :
- un carter transversal à la direction d'avancement de la machine durant le travail,
- plusieurs rotors porte-outils montés sous le carter et susceptibles chacun de tourner autour d'un axe (x - x') respectif sensiblement vertical,
- des organes d'entraînement logés dans le carter et destinés à assurer l'animation des rotors porte-outils,
- des outils de travail présentant une partie de travail et une partie de liaison laquelle est destinée à être montée radialement par rapport à l'axe (x - x') sur le rotor porte-outils correspondant,
- des logements prévus sur les rotors porte-outils pour y positionner les parties de liaison,
   et
- un élément de liaison reliant entre eux au moins deux outils de travail d'un même rotor porte-outils de manière à retenir radialement lesdits outils de travail,
caractérisée en ce que les logements sont conçus de manière à retenir axialement selon l'axe (x - x') les parties de liaison, l'élément de liaison étant une pièce distincte de celle ou celles servant à former lesdits logements.

Selon une réalisation avantageuse de la machine de travail du sol conforme à l'invention, l'élément de liaison présente une forme sensiblement en U, dont les extrémités forment des broches et dont la partie médiane forme un organe porteur pour lesdites broches.

Selon une réalisation particulièrement intéressante de la machine conforme à l'invention, l'élément de liaison est retenu sur le rotor porte-outils ou sur les parties de liaison par l'intermédiaire d'au moins une goupille du type automatique.

D'autres particularités et avantages apparaîtront à la lecture de la description détaillée, figurant ci-après, et faite en se référant aux dessins annexés, donnés à titre d'exemples illustratifs mais non limitatifs, dans lesquels :
- la figure 1 représente une vue globale d'un exemple d'une machine conforme à l'invention, à savoir une herse rotative,
- la figure 2 représente une vue partiellement en coupe d'un exemple de montage d'outils de travail à l'aide d'un élément de liaison sur un rotor porte-outils d'une machine conforme à l'invention,
- la figure 3 représente une vue en perspective d'un autre mode de réalisation dudit élément de liaison,
- la figure 4 représente une vue de dessus, partiellement en coupe du montage de la figure 2,
- la figure 5 représente une vue similaire à la figure 4 d'un autre mode de réalisation du montage d'outils de travail sur un rotor porte-outils,
- la figure 6 représente une vue similaire à la figure 2 d'un mode supplémentaire de réalisation du montage d'outils de travail sur un rotor porte-outils,
- la figure 7 représente une vue en perspective de l'élément de liaison de la figure 6,
- la figure 8 représente une vue de face de l'outil de la figure 5,
- la figure 9 représente une vue latérale de l'outil de travail représenté aux figures 5 et 8,
- la figure 10 représente une vue de dessus de l'outil de travail représenté aux figures 5, 8 et 9.

Dans la suite de la description, il sera fait allusion à divers modes de réalisation de la machine conforme à l'invention. Ces modes de réalisation se rapportent souvent à une (des) pièce(s) ou à un (des) élément(s) isolé(s), les autres parties de la machine restant identiques d'un mode de réalisation à l'autre. Ainsi, lorsque l'on passe d'un mode de réalisation à un autre, ledit (lesdits) élément(s) ou ladite (lesdites) pièce(s) de la machine conforme(s) à l'invention porte(nt) la même dénomination et est (sont) affecté(s) d'une référence augmentée ou diminuée d'un chiffre multiple de 100. Les parties identiques dans les différents modes de réalisation conservent quant à elles les mêmes références.

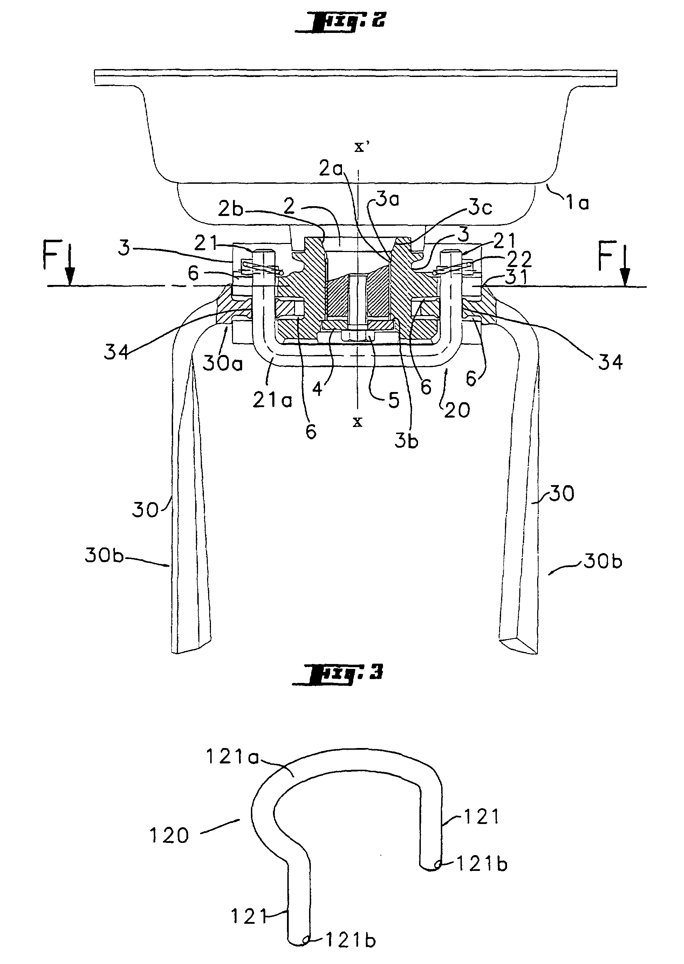

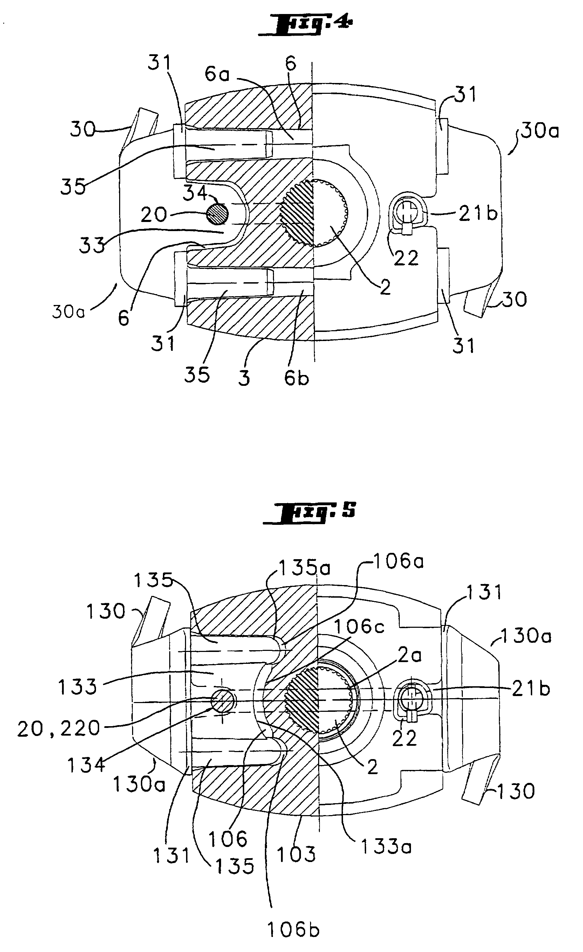

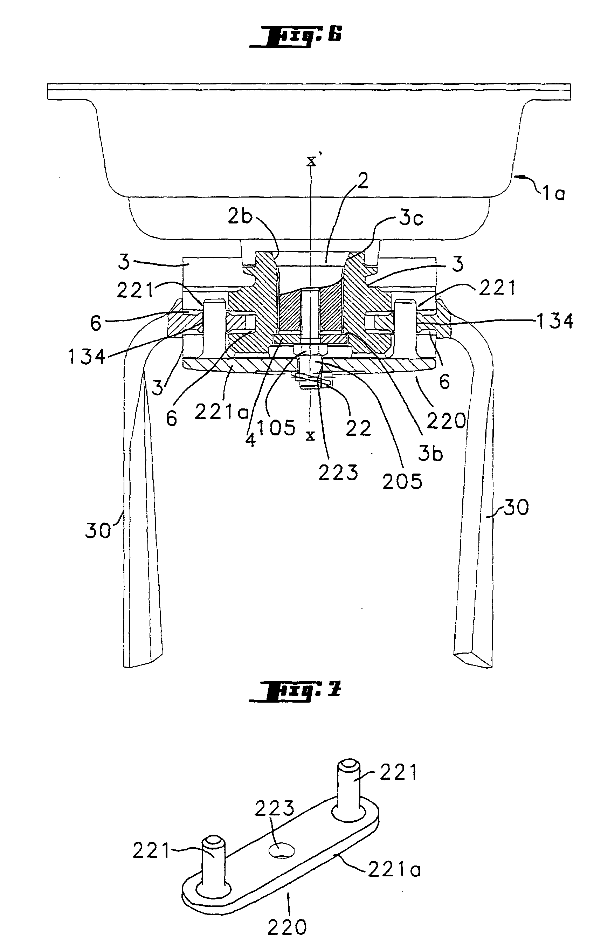

Les figures 4, 5 et 6 représentent chacune une vue, partiellement en coupe, d'un rotor porte-outils (3 ; 103) d'une herse rotative (1). Cette dernière est constituée d'un carter (1a) dans lequel sont agencés des organes d'entraînement non représentés aux figures mais connues de l'homme de l'art. Ces organes d'entraînement ont pour fonction de transmettre un mouvement de rotation par exemple d'une prise de force d'un tracteur vers des arbres (2), orientés chacun selon un axe (x - x') respectif sensiblement vertical durant le travail.

Chaque arbre (2) est destiné à entraîner en rotation un rotor porte-outils (3 ; 103) correspondant. Ce dernier est par exemple monté sur l'arbre (2) selon l'axe (x - x'). L'arbre (2) peut avantageusement être pourvu de cannelures (2a) sur sa périphérie de manière à obtenir une liaison d'entraînement avec des cannelures (3a) correspondantes du rotor porte-outils (3 ; 103). En outre, une vis (5 ; 105) vissée dans l'arbre (2), maintient axialement le rotor porte-outils (3 ; 103) sur l'arbre (2) entre une rondelle d'appui (4) et une partie conique (2b) de l'arbre (2).

Le rotor porte-outils (3 ; 103) présente alors un rebord (3b) contre lequel la rondelle d'appui (4) vient en butée, et une partie conique (3c) complémentaire de la partie conique (2b) de l'arbre (2). Le rotor porte-outils (3 ; 103) est également pourvu d'un logement (6 ; 106), destiné à positionner des outils de travail (30 ; 130). Le logement (6 ; 106) est réalisé dans ce mode de réalisation, notamment sous forme de deux trous oblongs (6a, 6b ; 106a, 106b) obtenus par moulage ou usinage ou tout autre moyen.

Les outils de travail (30 ; 130) sont constitués d'une partie de travail (30b ; 130b) et d'une partie de liaison (30a ; 130a). La partie de travail (30b ; 130b) et la partie de liaison (30a ; 130a) s'étendent, de préférence, selon des directions sensiblement perpendiculaires de manière à réaliser une forme globale coudée. La partie de liaison (30a : 130a) est engagée dans le logement (6 ; 106) correspondant, lequel est ménagé, par tout moyen connu, dans le rotor porte-outils (3 ; 103). Le logement (6 ; 106) constitue ainsi un dégagement de matière s'étendant sensiblement orthogonalement à l'axe (x - x').

Le logement (6 ; 106) présente une forme complémentaire à la partie de liaison (30a ; 130a) de l'outil de travail (30 ; 130). Le logement (6 ; 106) est donc réalisé en un (plusieurs) dégagement(s) de matière sur le rotor porte-outils (3 ; 103) pour recevoir l'outil de travail (30 ; 130) présentant une forme sensiblement complémentaire audit (auxdits) dégagement(s). A chaque forme particulière d'un outil de travail (30 ; 130) et plus précisément de sa partie de liaison (30a ; 130a) correspond donc une forme (ou un dégagement) complémentaire ménagée dans le rotor porte-outils (3 ; 103). Les dimensions de la partie de liaison (30a ; 130a) et du logement (6 ; 106) sont avantageusement choisies pour assurer un jeu mécanique optimal de manière à favoriser un démontage rapide des outils de travail (30 ; 130) de leur support, en l'occurrence de leur rotor porte-outils (3 ; 103).

Selon un autre mode de réalisation de la machine conforme à l'invention, les logements (6 ; 106) peuvent également être au moins partiellement formés avec une pièce rapportée sur le rotor porte-outils (3 ; 103). Cette pièce peut par exemple être fixée sur le rotor porte-outils (3 ; 103) à l'aide de vis ou de tout autre moyen de fixation.

La machine conforme à l'invention comporte également des moyens de maintien pour maintenir les outils de travail (30 ; 130) sur leur rotor porte-outils (3 ; 103). Ces moyens de maintien comportent un élément de liaison (20 ; 120 ; 220) reliant entre eux au moins deux outils de travail (30 ; 130) d'un même rotor porte-outils (3 ; 103) pour empêcher une désolidarisation desdits outils de travail (30 ; 130) de leur rotor porte-outils (3 ; 103).

Selon une réalisation avantageuse de l'invention, l'élément de liaison (20 ; 120 ; 220) présente une forme sensiblement en U, dont les extrémités forment des broches (21 ; 121 ; 221) qui s'engagent dans les outils de travail (30 ; 130) de manière à les retenir sur le rotor porte-outils (3 ; 103), et dont la partie médiane constitue un organe porteur (21a ; 121a ; 221a) supportant lesdites broches (21 ; 121 ; 221).

Avantageusement l'élément de liaison (20 ; 120 ; 220) est maintenu en position à l'aide d'un moyen de retenu (22). Ce dernier est constitué par exemple d'au moins une goupille automatique ou de tout autre moyen connu.

Selon les exemples de montage représentés aux figures, l'élément de liaison (20 ; 120 ; 220) permet de lier les outils de travail (30 ; 130) par paire sur chaque rotor porte-outils (3 ; 103). L'un des outils de travail (30 ; 130) peut donc être retenu ou maintenu en position sur le rotor porte-outils (3 ; 103) par au moins un autre outil de travail (30 ; 130).

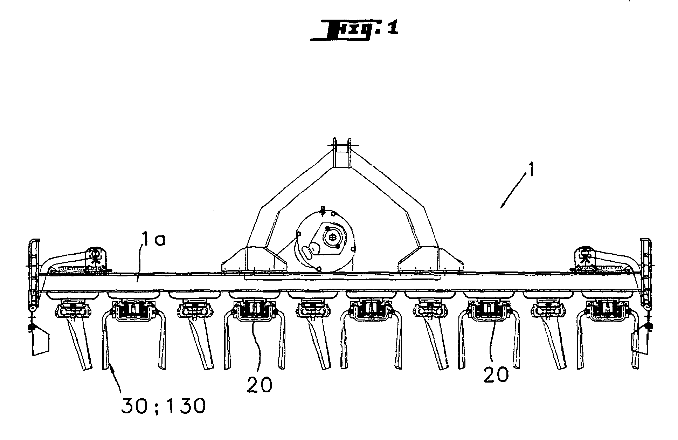

Les figures 2 et 3 représentent l'élément de liaison (20 ; 120) sous forme de tige métallique.

Cette dernière est pourvue à l'extrémité d'au moins une broche (21 ; 121) d'un perçage (21b, 121b) pour le moyen de retenue (22). Ceci correspond à l'exemple de réalisation de la figure 2, où l'élément de liaison (20) est monté sur les outils de travail (30) et sur le rotor porte-outils (3) de bas en haut.

Il est intéressant de noter que la perte de l'un des moyens de retenue (22) n'a aucune incidence sur la sécurité d'utilisation de la machine conforme à l'invention. C'est effectivement l'autre goupille qui assurera toujours le maintien en position de l'élément de liaison (20 ; 120) et par conséquent des outils de travail (30 ; 130).

La séparation entre les outils de travail (30 ; 130) et le rotor porte-outils (3 ; 103) est ainsi évitée.

En revanche, l'exemple de réalisation de la figure 3, correspond à un élément de liaison (120) du type tige métallique dont la forme autorise un montage selon une direction différente.

L'organe porteur de cet élément de liaison (120) s'étend selon un arc de cercle de manière à se loger autour du rotor porte-outils (3 ; 103). Les extrémités formant les broches (121) sont orientées à 90° de la partie en arc de cercle de façon à pouvoir s'engager simultanément par le haut dans des ouvertures (34 ; 134) ménagées dans les outils de travail (30 ; 130). Cet élément de liaison (120) est également pourvu d'un perçage (121b) à l'extrémité de chacune de ses broches (121).

En partant de la partie réalisant un arc de cercle, il est possible d'adapter la longueur des broches (121) en fonction de la configuration des outils (30 ; 130) ou du rotor porte-outils (3 ; 103). Les broches (121) traversant les ouvertures (34 ; 134) peuvent éventuellement être dépourvues de moyen de retenue (22) et de perçage (121b) de par leur sens de montage allant du haut vers le bas.

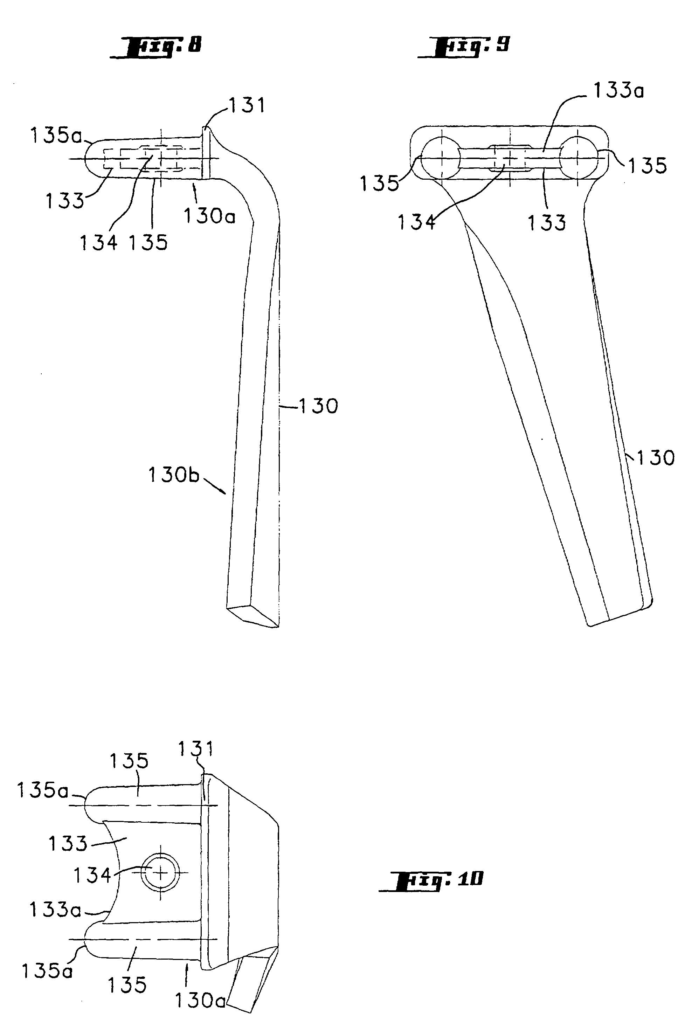

Selon un autre mode de réalisation supplémentaire de la machine conforme à l'invention représentée notamment aux figures 6 et 7, l'élément de liaison (220) comporte un organe porteur (221a) constitué d'une lame dont les extrémités portent chacune une broche (221) perpendiculaire au plan d'extension de ladite lame.

Avantageusement l'organe porteur (221a) de l'élément de liaison (220) comporte aussi un passage (223) localisé entre les broches (221). La vis (105) comporte également une tête se terminant par un embout (205). Ce dernier est destiné à traverser le passage (223) lorsque l'élément de liaison (220) est monté sur les outils de travail (30, 130). Dans cette réalisation, le moyen de retenue (22) est monté sur l'embout (205) (figure 6) et permet de maintenir en position l'élément de liaison (220) et par conséquent les outils de travail (30 ; 130). Le moyen de retenue (22) peut également être monté sur le rotor porte-outils (3 ; 103) ou sur une pièce rendue solidaire dudit rotor porte-outils (3 ; 103) ou de l'arbre (2). Le montage de l'élément de liaison (220) se fait de bas en haut dans cet exemple et les broches (221) présentent une longueur suffisante pour traverser les ouvertures (34 ; 134) des outils de travail (30 ; 130).

Ainsi la lame réalisant l'organe porteur (221a) présente le passage (223) traversé par l'embout (205), lequel est solidaire du rotor porte-outils (3 ; 103) et porte la goupille.

Selon un autre exemple de réalisation non représenté aux figures, l'organe porteur (221a) est une tige cylindrique, présentant une portion sensiblement applatie dans laquelle est ménagé le passage (223). L'élément de liaison (221) est par exemple une pièce forgée.

Selon un mode de réalisation supplémentaire de la machine conforme à l'invention, non représenté aux figures, l'embout (205) peut être remplacé par deux embouts solidaires du rotor porte-outils (3). Ces deux embouts s'étendent vers le bas de façon à coopérer avec l'organe porteur (221a). Ce dernier présente à cet effet des lumières correspondantes en remplacement du passage (223) central. L'écartement desdites lumières est donc inférieur à l'écartement des broches (221). En outre, deux embouts solidaires du rotor porte-outils peuvent être obtenus directement par moulage dudit rotor porte-outils. L'un des embouts au moins présente un perçage, lequel sert à fixer une goupille automatique, lorsque l'élément de liaison (220) est en place sur le rotor porte-outils. Les goupilles automatiques sont facilement accessibles et le montage de l'élément de liaison (220) se fait par le bas améliorant ainsi le temps nécessaire au remplacement des outils de travail (30 130).

Dans l'exemple de réalisation de la figure 4, la partie de liaison (30a) présente une languette centrale (33) ainsi qu'un doigt (35) situé de part et d'autre de ladite languette centrale (33). Le rotor porte-outils (3) présente donc un logement (6) permettant de recevoir les doigts (35) et la languette centrale (33). La figure 4 visualise également l'élément de liaison (20) traversant l'ouverture (34) laquelle est ménagée dans la languette centrale (33).

Par ailleurs la partie de liaison (30a) présente au moins une collerette (31) venant en butée contre le rotor porte-outils (3), lorsque ladite partie de liaison (30a) est complètement engagée dans le logement (6) correspondant. Ce dernier présente deux formes cylindriques complémentaires à la forme des doigts (35). L'association de ces formes complémentaires, combinée aux effets de stabilité obtenus par la collerette (31) contribuent à encaisser les contraintes exercées sur l'outil de travail (30) lors de l'utilisation de la machine. L'usure, à des endroits très localisés, est ainsi fortement diminuée.

D'autres combinaisons d'éléments ou de pièces de différents modes de réalisation conformes à l'invention, peuvent également s'envisager sans toutefois sortir du cadre de la présente invention. Ainsi, l'élément de liaison (20) peut convenir à l'outil de travail (30) ou à l'outil de travail (130). Il en est de même pour l'élément de liaison (120) ou (220).

Selon le mode de réalisation de la machine conforme à l'invention et représenté à la figure 5, le rotor porte-outils (103) présente un logement (106) pour recevoir la partie de liaison (130a) d'un outil de travail (130).

La languette centrale (133) de cet outil de travail (130) s'étend depuis l'un des doigts (135) jusqu'à l'autre doigt (135). Les doigts (135) sont situés de part et d'autre de la languette (133) et sont raccordés à celle-ci.

Le logement (106) présente avantageusement un dégagement de matière (106a ; 106b) complémentaire à la forme constituée par les deux doigts (135) et la languette centrale (133).

La partie de liaison (130a) présente dans ce cas de figure, une section transversale sensiblement plane se prolongeant vers des terminaisons d'épaisseur accrue et au moins partiellement arrondies ou circulaires.

La partie de liaison (130a) pénètre dans le logement (106) jusqu'à l'arrivée en butée de la collerette (131) contre le rotor porte-outils (103). Le maintien de l'outil de travail (130) sur le rotor porte-outils (103) est assuré par l'élément de liaison (20 ; 120 ; 220) traversant l'ouverture (134) ménagé dans la languette (133) d'une part et l'ouverture (134) d'au moins un autre outil de travail (130) d'autre part.

L'outil de travail (130) adapté à ce mode de réalisation est par exemple représenté plus en détail aux figures 8 à 10. La figure 9 montre par exemple la liaison entre la languette centrale (133) et les doigts (135). Ceci augmente la rigidité de la partie de liaison (130a).

La forme quasi-cylindrique des doigts (135) permet également de réduire le jeu mécanique et par conséquent l'usure desdits doigts (135) suite aux contacts avec les parois internes du logement (106).

En effet, la partie cylindrique et le cas échéant une terminaison arrondie (135a) des doigts (135) augmentent la surface de contact entre les outils de travail (130) et le rotor porte-outils (103). Cette surface de contact permet ainsi de répartir davantage les contraintes et les efforts exercés sur la partie de liaison (130a). Les efforts moins localisés évitent donc une usure prématurée ainsi que l'augmentation du jeu fonctionnel entre la partie de liaison (130a) et le rotor porte-outils (103).

Un autre avantage est obtenu avec la coopération entre la forme des doigts (135) et la collerette (131) venant en butée contre le rotor porte-outils (103). Un positionnement correct ainsi que la répartition optimale des contraintes ou efforts permettent d'augmenter la durée de vie des rotors porte-outils (103) et des outils de travail (130).

Selon un mode de réalisation additionnel de l'outil de travail (130), la collerette (131) peut être supprimée. Le positionnement de l'outil (130) est obtenu alors à l'aide de la languette (133) dont la partie extrême (133a) vient en butée contre un fond (106c) du logement (106). Le contact obtenu entre le fond (106c) et la partie extrème (133a) permet également d'encaisser les efforts auxquels est soumis l'outil de travail (130) durant le travail du sol. Les terminaisons arrondies (135a) peuvent également selon le cas venir en butée contre des parties correspondantes et complémentaires au niveau de la forme, du logement (106a ; 106b). Un contact optimal, durant le travail, est alors assuré par les doigts (135) de forme sensiblement cylindrique.

Un autre avantage de la machine conforme à l'invention est lié à un démontage/remontage des outils de travail (30 ; 130) rapide. Les moyens de maintien desdits outils de travail (30 ; 130) sont en outre situés dans une zone facilement accessible. Il est ainsi inutile, selon le cas, de tourner le rotor porte-outils (3 ; 103) pour démonter l'un après l'autre les outils de travail (30 ; 130).

Comme visible sur les figures 4 et 5, les doigts (35 ; 135) et la languette (33, 133) d'un outil (30 ; 130) s'étendent dans un plan d'extension sensiblement orthogonal à l'axe (x - x') du rotor porte-outils (3 ; 103) correspondant.

En outre, les deux doigts (35 ; 135) d'un même outil de travail (30 ; 130) sont sensiblement parallèles entre eux. Lorsqu'ils sont montés sur leur rotor porte-outils (3 ; 103) correspondant, leur extrémité s'étend dans le voisinage de l'arbre (2) correspondant.

En ce qui concerne les broches (21 ; 121 ; 221) de l'élément de liaison (20 ; 120 ; 220), il est visible que celles-ci s'étendent également avantageusement sensiblement parallèlement entre elles. En outre, elles s'étendent sensiblement parallèlement à l'axe (x - x') du rotor porte-outils (3 ; 103) correspondant quand l'élément de liaison (20 ; 120 ; 220) est monté.

Avantageusement au moins une partie de chaque broche (21 ; 121 ; 221) traverse entièrement l'outil (30 ; 130) correspondant, lequel comporte l'ouverture (34 ; 134) à cet effet.

Un avantage supplémentaire est obtenu avec l'élément de liaison (20 ; 120 ; 220) et plus précisément par sa forme sensiblement en U.

L'organe porteur (21a ; 121a ; 221a) s'étend dans une zone facilement accessible. En outre, la préhension de cet organe porteur (21a ; 121a ; 221a) facilite le retrait de l'élément de liaison (20 ; 120 ; 220) et par conséquent le remplacement des outils de travail (30 ; 130). L'accessibilité et une préhension optimale de l'organe porteur (21a ; 121a ; 221a) permettent de démonter rapidement les outils de travail (30 ; 130) même en cas de grippage éventuel de l'élément de liaison (20 ; 120 ; 220) sur une autre pièce.

## Revendications

1. Machine de travail du sol munie d'une structure porteuse et comportant :
- un carter (1a) transversal à la direction d'avancement de la machine durant le travail,
- plusieurs rotors porte-outils (3 ; 103) montés sous le carter (1a) et susceptibles chacun de tourner autour d'un axe (x - x') respectif sensiblement vertical,
- des organes d'entraînement logés dans le carter (1a) et destinés à assurer l'animation des rotors porte-outils (3 ; 103),
- des outils de travail (30 ; 130) présentant une partie de travail et une partie de liaison (30a ; 130a) laquelle est destinée à être montée radialement par rapport à l'axe (x - x') sur le rotor porte-outils (3 ; 103) correspondant,
- des logements (6 ; 106) prévus sur les rotors porte-outils (3 ; 103) pour y positionner les parties de liaison (30a ; 130a),
et
- un élément de liaison (20 ; 120 ; 220) reliant entre eux au moins deux outils de travail (30 ; 130) d'un même rotor porte-outils (3 ; 103) de manière à retenir radialement lesdits outils de travail (30 ; 130),
***caractérisée en ce* que** les logements (6 ; 106) sont conçus de manière à retenir axialement selon l'axe (x - x') les parties de liaison (30a ; 130a), l'élément de liaison (20 ; 120 ; 220) étant une pièce distincte de celle ou celles servant à former lesdits logements (6 ; 106).

2. Machine selon la revendication 1, ***caractérisée en ce* que** ledit élément de liaison (20 ; 120 ; 220) comporte d'une part au moins une broche (21 ; 121 ; 221) par outil de travail (30 ; 130) correspondant, destinée à être engagée dans ledit outil de travail (30 ; 130) et d'autre part un organe porteur (21a ; 121a ; 221a) supportant lesdites broches (21 ; 121; 221).

3. Machine selon la revendication 2, ***caractérisée en ce* que** les broches (21 ; 121 ; 221) s'étendent sensiblement parallèlement à l'axe (x - x') du rotor porte-outils (3 ; 103) correspondant.

4. Machine selon la revendication 2 ou *3,* ***caractérisée en ce* que** l'organe porteur (21a ; 121a ; 221a) s'étend dans un plan d'extension sensiblement orthogonal à l'axe (x - x') du rotor porte-outils (3 ; 103) correspondant.

5. Machine selon l'une quelconque des revendications 2 *à 4,* ***caractérisée en ce* que** l'élément de liaison (20 ; 120 ; 220) présente une forme sensiblement en U dont les extrémités forment les broches (21 ; 121 ; 221) et dont la partie médiane forme l'organe porteur (21a ; 121a ; 221a).

6. Machine selon l'une quelconque des revendications 2 à 5, ***caractérisée en ce* qu'**au moins une partie de chaque broche (21 ; 121 ; 221) traverse entièrement l'outil (30 ; 130) correspondant lequel comporte une ouverture (34; 134) à cet effet.

7. Machine selon l'une quelconque des revendications 1 à 6, ***caractérisée en ce* que** l'élément de liaison (20 ; 120 ; 220) est retenu sur le rotor porte-outils (3 ; 103) ou sur les parties de liaison (30a ; 130a) par l'intermédiaire d'un élément de retenue (22) comprenant au moins une goupille du type automatique.

8. Machine selon l'une quelconque des revendications 2 à 7, ***caractérisée en ce* que** l'organe porteur (121a) présente une forme destinée à s'étendre au moins en partie autour du rotor porte-outils (3 ; 103) correspondant.

9. Machine selon la revendication 8, ***caractérisée en ce* que** ladite forme est une forme en arc de cercle.

10. Machine selon l'une quelconque des revendications 1 à 9, ***caractérisée en ce* que** l'élément de liaison (20 ; 120 ; 220) est réalisé avec au moins partiellement une tige métallique.

11. Machine selon l'une quelconque des revendications 2 à 7, ***caractérisée en ce* que** l'organe porteur (221a) de l'élément de liaison (220) est constitué d'une lame.

12. Machine selon l'une quelconque des revendications 7 à 11, ***caractérisée en ce* que** la goupille est montée sur l'élément de liaison (20 ; 120 ; 220).

13. Machine selon l'une quelconque des revendications 7, 10 ou 11, ***caractérisée en ce* que** la goupille est montée sur le rotor porte-outils (3 ; 103) ou sur une pièce rendue solidaire dudit rotor porte-outils (3 ; 103).

14. Machine selon la revendication 13, ***caractérisée en ce* que** l'élément de liaison (220) présente un passage (223) traversé pour un embout (205) lequel est solidaire du rotor porte-outils (3 ; 103) et porte la goupille.

15. Machine selon l'une quelconque des revendications 1 à 14, ***caractérisée en ce* que** les logements (6 ; 106) sont réalisés avec des dégagements de matière ménagés sur le rotor porte-outils (3 ; 103) pour recevoir des outils de travail (30 ; 130) correspondants lesquels présentent, à cet effet, une forme sensiblement complémentaire auxdits dégagements.

16. Machine de travail du sol selon l'une quelconque des revendications 1 à 15, ***caractérisée en ce* que** les logements (6 ; 106) sont au moins partiellement formés avec une pièce rapportée sur le rotor porte-outils (3 ; 103).

17. Machine selon l'une quelconque des revendications 1 à 16, ***caractérisée en ce* que** chaque rotor porte-outils (3 ; 103) comporte un nombre pair d'outils de travail (30 ; 130) et qu'à chaque paire d'outils de travail (30 ; 130) est associé un élément de liaison (20 ; 120 ; 220).

## Patentansprüche

1. Bodenbearbeitungsmaschine, die mit einem Traggestell versehen ist und
- einen Getriebekasten (1a), der sich im Betrieb quer zur Vorschubrichtung der Maschine erstreckt,
- mehrere Werkzeugtragrotoren (3; 103), die unter dem Getriebekasten (1a) angebracht sind und sich jeweils um eine jeweilige, im wesentlichen vertikale Achse (x - x') drehen können,
- in dem Getriebekasten (1a) untergebrachte Antriebselemente, die den Antrieb der Werkzeugtragrotoren (3; 103) gewährleisten sollen,
- Arbeitswerkzeuge (30; 130), die einen Arbeitsteil und einen Verbindungsteil (30a; 130a) aufweisen, der radial zur Achse (x - x') an dem entsprechenden Werkzeugtragrotor (3; 103) angebracht werden soll,
- Aufnahmen (6; 106), die an den Werkzeugtragrotoren (3; 103) vorgesehen sind, um dort die Verbindungsteile (30a; 130a) zu positionieren,
und
- ein Verbindungselement (20; 120; 220), das mindestens zwei Arbeitswerkzeuge (30; 130) eines gleichen Werkzeugtragrotors (3; 103) so miteinander verbindet, daß die Arbeitswerkzeuge (30; 130) radial festgehalten werden,
umfaßt,
***dadurch gekennzeichnet,* daß** die Aufnahmen (6; 106) so entworfen sind, daß sie die Verbindungsteile (30a; 130a) axial entlang der Achse (x - x') festhalten, wobei es sich bei dem Verbindungselement (20; 120; 220) um ein Teil handelt, das von dem oder denen verschieden ist, das bzw. die zur Bildung der Aufnahmen (6; 106) dient bzw. dienen.

2. Maschine nach Anspruch 1, ***dadurch gekennzeichnet,* daß** das Verbindungselement (20; 120; 220) einerseits mindestens einen Zapfen (21; 121; 221) pro entsprechendem Arbeitswerkzeug (30; 130), der in das Arbeitswerkzeug (30; 130) in Eingriff gelangen soll, und andererseits ein die Zapfen (21; 121; 221) tragendes Tragelement (21a; 121a; 221a) umfaßt.

3. Maschine nach Anspruch 2, ***dadurch gekennzeichnet,* daß** sich die Zapfen (21; 121; 221) im wesentlichen parallel zur Achse (x - x') des entsprechenden Werkzeugtragrotors (3; 103) erstrecken.

4. Maschine nach Anspruch 2 oder 3, ***dadurch gekennzeichnet,* daß** sich das Tragelement (21a; 121a; 221a) in einer im wesentlichen senkrecht zur Achse (x - x') des entsprechenden Werkzeugtragrotors (3; 103) verlaufenden Erstreckungsebene erstreckt.

5. Maschine nach irgend einem der Ansprüche 2 bis 4, ***dadurch gekennzeichnet,* daß** das Verbindungselement (20; 120; 220) im wesentlichen die Form eines U aufweist, dessen Enden die Zapfen (21; 121; 221) bilden und dessen Mittelteil das Tragelement (21a; 121a; 221a) bildet.

6. Maschine nach irgend einem der Ansprüche 2 bis *5,* ***dadurch gekennzeichnet,* daß** mindestens ein Teil jedes Zapfens (21; 121; 221) das entsprechende Werkzeug (30; 130) vollständig durchquert, wobei letzteres dazu eine Öffnung (34; 134) enthält.

7. Maschine nach irgend einem der Ansprüche 1 bis 6, ***dadurch gekennzeichnet,* daß** das Verbindungselement (20; 120; 220) mittels eines Halteelements (22), das mindestens einen automatischen Stift enthält, am Werkzeugtragrotor (3; 103) oder an den Verbindungsteilen (30a; 130a) festgehalten wird.

8. Maschine nach irgend einem der Ansprüche 2 bis 7, ***dadurch gekennzeichnet,* daß** das Tragelement (121a) eine Form aufweist, die sich zumindest teilweise um den entsprechenden Werkzeugtragrotor (3; 103) herum erstrecken soll.

9. Maschine nach Anspruch 8, ***dadurch gekennzeichnet,* daß** es sich bei der Form um eine Kreisbogenform handelt.

10. Maschine nach irgend einem der Ansprüche 1 bis 9, ***dadurch gekennzeichnet,* daß** das Verbindungselement (20; 120; 220) zumindest teilweise mit einer metallischen Stange realisiert ist.

11. Maschine nach irgend einem der Ansprüche 2 bis 7, ***dadurch gekennzeichnet,* daß** das Tragelement (221a) des Verbindungselements (220) aus einem Blatt besteht.

12. Maschine nach irgend einem der Ansprüche 7 bis 11, ***dadurch gekennzeichnet,* daß** der Stift am Verbindungselement (20; 120; 220) angebracht ist.

13. Maschine nach irgend einem der Ansprüche 7, 10 oder 11, ***dadurch gekennzeichnet,* daß** der Stift am Werkzeugtragrotor (3; 103) oder an einem mit dem Werkzeugtragrotor (3; 103) fest verbundenen Teil angebracht ist.

14. Maschine nach Anspruch 13, ***dadurch gekennzeichnet,* daß** das Verbindungselement (220) einen Durchgang (223) aufweist, der von einem Endstück (205) durchquert wird, das mit dem Werkzeugtragrotor (3; 103) fest verbunden ist und den Stift trägt.

15. Maschine nach irgend einem der Ansprüche 1 bis 14, ***dadurch gekennzeichnet,* daß** die Aufnahmen (6; 106) mit Materialausnehmungen am Werkzeugtragrotor (3; 103) zur Aufnahme von entsprechenden Arbeitswerkzeugen (30; 130) hergestellt sind, wobei die Arbeitswerkzeuge dazu eine zu den Ausnehmungen im wesentlichen komplementäre Form aufweisen.

16. Bodenbearbeitungsmaschine nach irgend einem der Ansprüche 1 bis 15, ***dadurch gekennzeichnet,* daß** die Aufnahmen (6; 106) zumindest teilweise mit einem am Werkzeugtragrotor (3; 103) angebrachten Teil ausgebildet sind.

17. Maschine nach irgend einem der Ansprüche 1 bis 16, ***dadurch gekennzeichnet,* daß** jeder Werkzeugtragrotor (3; 103) eine gerade Anzahl von Arbeitswerkzeugen (30; 130) trägt und daß jedem Paar Arbeitswerkzeuge (30; 130) ein Verbindungselement (20; 120; 220) zugeordnet ist.

## Claims

1. Soil-working machine equipped with a carrying structure and comprising:
- a gearbox (1a) transverse to the direction of travel of the machine during work,
- several tool-carrying rotors (3; 103) mounted under the gearbox (1a) and each capable of rotating about a substantially vertical respective axis (x - x'),
- drive elements housed in the gearbox (1a) and intended to drive the tool-carrying rotors (3; 103),
- work tools (30; 130) having a working part and a connecting part (30a; 130a) which is intended to be mounted radially with respect to the axis (x - x') on the corresponding tool-carrying rotor (3; 103),
- housings (6; 106) provided on the tool-carrying rotors (3; 103) in which the connecting parts (30a; 130a) can be positioned,
and
- a connecting element (20; 120; 220) connecting at least two work tools (30; 130) of one and the same tool-carrying rotor (3; 103) together so as to hold said work tools (30; 130) radially,
***characterized in* that** the housings (6; 106) are designed to hold the connecting parts (30a; 130a) axially along the axis (x - x'), the connecting element (20; 120; 220) being a separate part from the part or parts which serve to form the said housings (6; 106).

2. Machine according to claim 1, ***characterized in* that** said connecting element (20; 120; 220) comprises, on one hand, at least one peg (21; 121; 221) per corresponding work tool (30; 130), and intended to be engaged in said work tool (30; 130) and, on another hand, a carrying element (21a; 121a; 221a) supporting said pegs (21; 121; 221).

3. Machine according to claim 2, ***characterized in* that** the pegs (21; 121; 221) run substantially parallel to the axis (x - x') of the corresponding tool-carrying rotor (3; 103).

4. Machine according to claim 2 or 3, ***characterized in* that** the carrying element (21a; 121a; 221a) runs in a plane of extension substantially orthogonal to the axis (x - x') of the corresponding tool-carrying rotor (3; 103).

5. Machine according to any one of claims 2 to 4, ***characterized in* that** the connecting element (20; 120; 220) has a substantially U-shape, the ends of which form the pegs (21; 121; 221) and the middle part of which forms the carrying element (21a; 121a; 221a).

6. Machine according to any one of claims 2 to 5, ***characterized in* that** at least part of each peg (21; 121; 221) passes entirely through the corresponding work tool (30; 130) which has an opening (34; 134) for that purpose.

7. Machine according to any one of claims 1 to 6, ***characterized in* that** the connecting element (20; 120; 220) is held on the tool-carrying rotor (3; 103) or on the connecting parts (30a; 130a) by a holding element (22) comprising at least one pin of automatic type.

8. Machine according to any one of claims 2 to *7,* ***characterized in* that** the carrying element (121a) has a shape intended to extend at least partly around the corresponding tool-carrying rotor (3; 103).

9. Machine according to claim 8, ***characterized in* that** said shape is an arc of a circle.

10. Machine according to any one of claims 1 to 9, ***characterized in* that** the connecting element (20; 120; 220) is produced at least partially using a metal rod.

11. Machine according to any one of claims 2 to 7, ***characterized in* that** the carrying element (221a) of the connecting element (220) consists of a plate.

12. Machine according to any one of claims 7 to 11, ***characterized in* that** the pin is mounted on the connecting element (20; 120; 220).

13. Machine according to any one of claims 7, 10 or 11, ***characterized in* that** the pin is mounted on the tool-carrying rotor (3; 103) or on a part secured to said tool-carrying rotor (3; 103).

14. Machine according to claim 13, ***characterized in* that** the connecting element (220) has a passage (223) through which an end piece (205) secured to the tool-carrying rotor (3; 103) and bearing the pin passes.

15. Machine according to any one of claims 1 to *14,* ***characterized in* that** the housings (6; 106) are made with cutouts of material from the tool-carrying rotor (3; 103) to accommodate corresponding work tools (30; 130) which, for that purpose, have a shape that substantially complements the cutouts.

16. Soil-working machine according to any one of claims 1 to 15, ***characterized in* that** the housings (6; 106) are at least partially formed with a part attached to the tool-carrying rotor (3; 103).

17. Machine according to any one of claims 1 to 16, ***characterized in* that** each tool-carrying rotor (3; 103) comprises an even number of work tools (30; 130) and that a connecting element (20; 120; 220) is associated with each pair of work tools (30; 130).
